(19) Europäisches Patentamt

European Patent Office

Office européen des brevets

(11) Numéro de publication : **0 354 097 B1**

(12) **FASCICULE DE BREVET EUROPEEN**

(45) Date de publication du fascicule du brevet :
**02.01.92 Bulletin 92/01**

(21) Numéro de dépôt : **89402116.1**

(22) Date de dépôt : **26.07.89**

(51) Int. Cl.⁵ : **F01N 3/34,** F02B 33/04,
F01N 3/26

(54) Dispositif de traitement des gaz d'échappement d'un moteur à combustion interne à deux temps.

(30) Priorité : **05.08.88 FR 8810899**

(43) Date de publication de la demande :
**07.02.90 Bulletin 90/06**

(45) Mention de la délivrance du brevet :
**02.01.92 Bulletin 92/01**

(84) Etats contractants désignés :
**DE GB IT**

(56) Documents cités :
**DE-A- 2 413 848**
**DE-A- 3 527 243**
**FR-A- 1 590 076**
**FR-A- 2 225 618**
**US-A- 3 091 078**
**US-A- 3 672 172**
**US-A- 4 011 725**
**US-A- 4 215 541**

(56) Documents cités :
**US-A- 4 359 016**
**Motortechnische Zeitschrift, vol. 35, no. 2,
février 1974, Stuttgart, DE, pages 46-54; A.
Bahr: "Motorteile und Zubehör"
Patent Abstracts of Japan, vol. 2, no. 25 (M-8)()
17 février 1978, & JP-A-52 139825 (Mitsubishi)
22 novembre 1977**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Aubriot, Daniel
23, rue Paulhan
F-78140 Velizy (FR)**

(74) Mandataire : **Boivin, Claude
9, rue Edouard-Charton
F-78000 Versailles (FR)**

## Description

Il est connu de dépolluer les gaz d'échappement d'un moteur à combustion interne en prévoyant un réacteur de post-combustion interposé sur la tubulure d'échappement du moteur et en alimentant ce réacteur en air carburé ou non (voir document FR-A-2225618) ; ce réacteur peut être muni ou non d'un catalyseur.

La présente invention a pour objet un dispositif de traitement des gaz d'échappement de ce type dans le cas d'un moteur à deux temps, du type à carter pompe (c'est-à-dire dans lequel l'admission et la compression se font dans le carter moteur) qui ne nécessite pas de pompe spéciale pour alimenter le réacteur en air, dans lequel les moyens d'alimentation du réacteur en air comprennent une conduite comportant un clapet anti-retour et débouchant dans le carter du moteur : Un dispositif semblable est décrit dans le document US-A-3672172.

Les gaz d'échappement des moteurs à deux temps contiennent une quantité importante d'oxygène, les catalyseurs d'oxydation sont longs à s'échauffer et ne remplissent pas toujours leur fonction. Le dispositif selon l'invention, qui remédie à ce défaut, est caractérisé en ce qu'il comporte une chambre de combustion auxiliaire qui est disposée entre le réacteur et le clapet anti-retour en série avec une électro-vanne d'isolement, et des moyens pour commander cette électro-vanne en fonction de paramètres de fonctionnement du moteur tels que la température des gaz d'échappement.

On a décrit ci-après, à titre d'exemples non limitatifs, divers modes de réalisation du dispositif selon l'invention, avec référence aux dessins annexés dans lesquels :

La Figure 1 montre un premier mode de réalisation sans catalyseur, dans le cas d'un moteur mono-cylindrique ;

La Figure 2 est une vue en coupe de la chambre de combustion auxiliaire ;

La Figure 3 est une vue semblable à la Figure 1, dans le cas d'un moteur multicylindrique ;

La Figure 4 montre un réacteur contenant un catalyseur et destiné à un moteur mono-cylindrique.

La Figure 5 montre un réacteur contenant un catalyseur et destiné à un moteur multicylindrique.

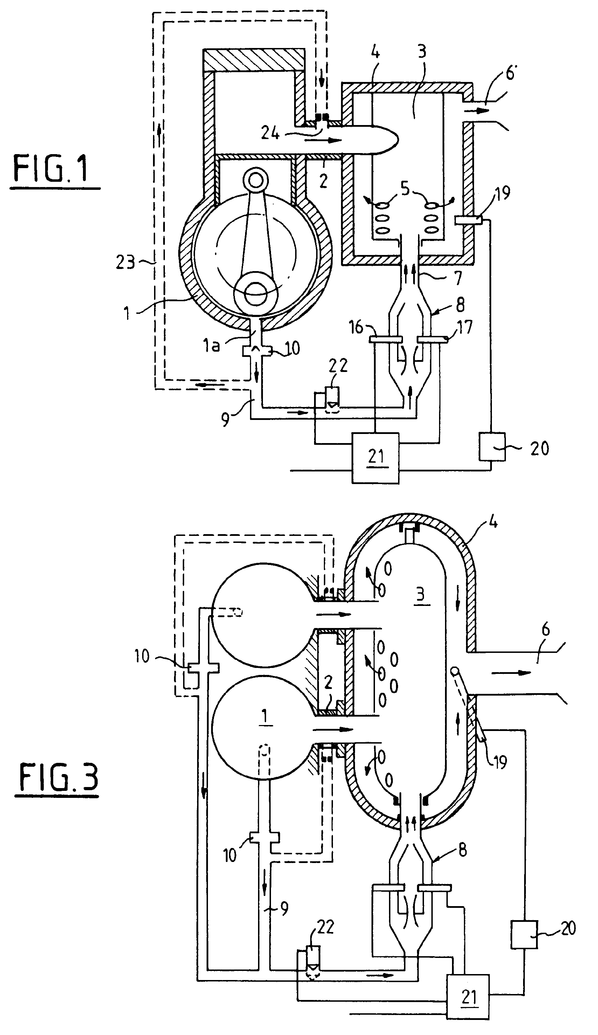

A la Figure 1 on voit en 1 le carter d'un moteur à combustion interne à deux temps monocylindrique. Le conduit d'échappement 2 du moteur est relié à un réacteur de post-combustion 3 qui est placé le plus près possible du moteur, le conduit 2 étant ainsi le plus court possible et le réacteur 3, enfermé dans une enceinte isolante 4. Le réacteur 3 présente des ouvertures 5 le mettant en communication avec l'enceinte 4 et cette dernière est reliée à un conduit d'évacuation 6.

Dans la chambre du réacteur 3 débouche un conduit 7 relié à une chambre de combustion auxiliaire 8 qui est par ailleurs reliée à un piquage 1a pratiqué dans la partie inférieure du carter 1 en son point le plus bas, par un conduit 9 sur lequel est interposé un clapet anti-retour 10.

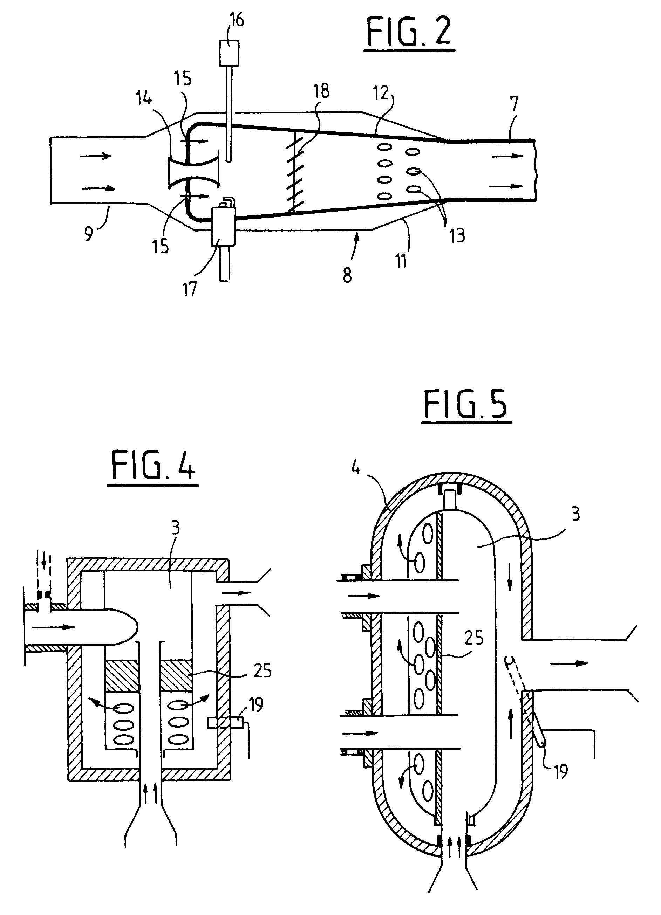

Comme on le voit plus particulièrement à la Figure 2, la chambre de combustion auxiliaire 8 comprend une enceinte extérieure 11 qui est reliée au conduit 9, une enceinte intérieure 12 qui est reliée au conduit 7 et communique avec l'enceinte 11 par des ouvertures 13 pour le passage de l'air de dilution. L'amont de l'enceinte 12 communique avec l'enceinte 11 par une tuyère 14 et des passages 15 ; cette enceinte 12 contient un injecteur 16, une bougie 17 et des aubes de turbulence 18. En fonctionnement, une partie de l'air carburé du carter 1 passe dans la chambre de combustion auxiliaire 8, et assure la combustion du combustible ou du mélange combustible injecté par l'injecteur 16, les gaz déchappement passant dans le réacteur de combustion 3 qu'ils réchauffent.

L'enceinte 4 contient un thermocouple 19 qui est connecté par un circuit amplificateur 20 à un calculateur d'allumage et d'injection 21 du moteur. Ce calculateur commande l'injecteur 16, la bougie 17 et une électro-vanne 22 interposée sur le conduit 9. Le thermocouple 19 assure ainsi la régulation de la température dans le réacteur en assurant l'ouverture de l'électro-vanne 22 quand la température dans l'enceinte 4 est par exemple inférieure à 820°C, et sa fermeture quand cette température est par exemple supérieure à 870°C.

Pour rendre la combustion plus complète dans le réacteur 3, le conduit 9 peut en aval du clapet 10 être relié au conduit 2 par une canalisation 23 munie d'un gicleur 24 du côté du réacteur de combustion 3.

La Figure 3 montre la même disposition appliquée à un moteur polycylindrique. Les divers conduits d'échappement 2 sont reliés à un même réacteur 3 qui est relié à la chambre de combustion auxiliaire 8 ; celle-ci est reliée par l'intermédiaire de l'électro-vanne 22 et d'un clapet anti-retour 10 à la partie inférieure des carters des différents cylindres.

Aux Figures 4 et 5, le réacteur de combustion 3 contient un catalyseur 25.

Les dispositifs qui viennent d'être décrits assurent une dépollution très rapide du moteur pratiquement dès sa mise en route. Ils assurent un contrôle parfait de la température de combustion et permettent l'utilisation d'un turbo-compresseur de suralimentation situé en aval du réacteur 3.

## Revendications

1. Dispositif de traitement des gaz d'échappement d'un moteur à combustion interne à deux temps, comprenant un réacteur de post-combustion (3) interposé sur la tubulure d'échappement du moteur et contenant éventuellement un catalyseur, des moyens pour alimenter ce réacteur en air, carburé ou non, comprenant une conduite (9) comportant un clapet anti-retour (10) et débouchant dans le carter (1) du moteur,

caractérisé en ce qu'il comporte une chambre de combustion auxiliaire (8) qui est disposée entre le réacteur (3) et le clapet anti-retour (10) en série avec une électro-vanne d'isolement (22), et des moyens (21) pour commander cette électro-vanne en fonction de paramètres de fonctionnement du moteur tels que la température des gaz d'échappement.

2. Dispositif selon la revendication 1,
caractérisé en ce que la sortie de la chambre de combustion auxiliaire (8) débouche directement dans le réacteur (3).

3. Dispositif selon la revendication 2,
caractérisé par une tubulure d'échappement (2) la plus courte possible plaçant l'entrée du réacteur de combustion au plus près du moteur.

4. Dispositif selon l'une des revendications précédentes,
caractérisé par un conduit auxiliaire (23) prélevant l'air additionnel entre le clapet anti-retour (10) et l'électro-vanne (22) pour l'amener à la tubulure d'échappement (2) à l'entrée du réacteur de post-combustion.

**Patentansprüche**

1. Vorrichtung zur Behandlung der Abgase eines Zweitakt-Verbrennungsmotors mit einem Nachverbrennungsreaktor (3), der in den Abgasrohrstutzen des Motors eingeschaltet ist und gegebenenfalls einen Katalysator enthält, und Mitteln zur Speisung dieses Reaktors mit Luft, die karburiert ist oder nicht, welche eine Leitung (9) aufweisen, die eine Rückschlagklappe (10) enthält und in das Motorgehäuse (1) einmündet, dadurch gekennzeichnet, daß sie eine Hilfsverbrennungskammer (8) aufweist, die zwischen dem Reaktor (3) und der Rückschlagklappe (10) in Serie mit eineim Trennelektromagnetventil (22) angeordnet ist, sowie Mittel (21) zur Ansteuerung dieses Elektromagnetventils in Abhängigkeit von Funktionsparametern des Motors, wie etwa der Abgastemperatur.

2. Vorrichtung nach Anspruch 1, dadurch gekennzeichnet, daß der Ausgang der Hilfsverbrennungskammer (8) unmittelbar in den Reaktor (3) einmündet.

3. Vorrichtung nach Anspruch 2, gekennzeichnet durch einen Abgasrohrstutzen (2), der so kurz wie möglich ausgebildet ist, so daß der Eingang des Verbrennungsreaktors so nahe wie möglich am Motor angeordnet ist.

4. Vorrichtung nach einem der vorhergehenden Ansprüche, gekennzeichnet durch eine Hilfsleitung (23), die zwischen der Rückschlagklappe (10) und dem Elektromagnetventil (22) Zusatzluft entnimmt, um sie dem Abgasrohrstutzen (2) am Eingang des Nachverbrennungsreaktors zuzuführen.

**Claims**

1. Exhaust gas treatment device for a two-stroke internal combustion engine including a post-combustion stator (3) inserted on the exhaust pipe of the engine and possibly containing a catalyst, means to feed this stator with air, possibly carbonized, and including a pipe (9) comprising a nonreturn valve (10) and opening into the housing (1) of the engine,

wherein it comprises an auxiliary combustion chamber (8) disposed between the stator (3) and the nonreturn valve (10) in series with an insulation electrovalve (22), and means (21) to control this electrovalve according to the engine operating parameters, such as the temperature of the exhaust gases.

2. Device according to claim 1,
wherein the outlet of the auxiliary combustion chamber (8) opens directly into the stator (3).

3. Device according to claim 2,
characterized by an exhaust pipe (2) as short as possible placing the inlet of the combustion stator as close as possible to the engine.

4. Device according to any one of the preceding claims, characterized by an auxiliary pipe (23) taking the additional air between the nonreturn valve (10) and the electrovalve (22) so as to bring it to the exhaust pipe (2) at the inlet of the post-combustion stator.

FIG.1

FIG.3

FIG. 2

FIG. 5

FIG. 4